# EUROPEAN PATENT SPECIFICATION

(11) **EP 4 628 343 B1**
(45) Date of publication and mention of the grant of the patent: **02.12.2026**
(21) Application number: 25158464.5
(22) Date of filing: 18.02.2025
(51) Int. Cl.: B60K 35/231, B60K 35/50, B60K 35/60, B62D 25/14, F16B 5/02, F16B 43/00

(54) **HEAD-UP DISPLAY COMPRISING A PSEUDO-COMBINED PORTION TO SUPPORT A FIXING MEMBER**
HEAD-UP-DISPLAY MIT EINEN PSEUDOKOMBINIERTEN BEREICH ZUR AUFNAHME EINES BEFESTIGUNGSELEMENTS
AFFICHAGE TÊTE HAUTE COMPRENANT UNE PORTION PSEUDO-COMBINÉE SERVANT DE SUPPORT À UN ÉLÉMENT DE FIXATION

(30) Priority: 02.04.2024 KR 20240044632
(43) Date of publication of application: 08.10.2025
(73) Proprietor: Hyundai Mobis Co., Ltd., Gangnam-gu Seoul 06141 (KR)
(72) Inventor: KIM, Byung Ki, 16931 Yongin-si (KR)
(74) Representative: Vossius & Partner Patentanwälte Rechtsanwälte mbB

(56) References cited:
- EP-B1- 3 545 352
- DE-A1- 102018 114 903
- FR-A1- 2 948 982
- US-A- 5 094 579
- US-A1- 2016 069 364
- US-A1- 2018 340 558

## Description

### CROSS-REFERENCE TO RELATED APPLICATION

**This** application claims the benefit under 35 USC § 119(a) of Korean Patent Application No. 10-2024-0044632 filed in the Korean Intellectual Property Office on April 02, 2024.

### BACKGROUND

### 1. Field

The present disclosure relates to a pseudo-combined assisting apparatus for a head-up display.

### 2. Description of the Related Art

Contents described herein merely provide background information relating to the present embodiment, and do not constitute the related art.

**A** head-up display is a device that displays images including information such as a speed, a remaining fuel level, route guidance information, and the like of a vehicle on a windshield. The head-up display is configured such that display information projected from a picture generation unit is displayed on the windshield.

The head-up display is formed by being disposed inside a cockpit of the vehicle. The head-up display is preferably disposed on a driver's seat to transmit driving information to a driver.

The head-up display may be combined with a cowl cross bar and/or a crash pad main panel (C/PAD) located inside the cockpit by using a bolt or a screw. For example, in order to combine the head-up display with an inner side of the cockpit, a worker combines the head-up display to the inner side of the cockpit by performing a process step of moving the bolt or the screw to a combining position and a process step of combining the bolt or the screw to the combining position by using an assembly tool or the like. However, there is a problem in that productivity of the process is degraded due to a process step in which the worker aligns the bolt or the screw at the combining position with a hand of the worker or by using the assembly tool.

DE 10 2018 114903 A1 relates to a head-up display for a vehicle.

EP 3 545 352 B1 relates to a head-up display device for a motor vehicle with a projection device.

US 2018/340558 A1 relates to a clamping device for an installation device which permits an adjustable and fixable angular adaptation of an article to a carrier.

FR 2 948 982 A1 relates to a device for pre-holding a screw on a first part intended to be fixed on a second part by means of said screw.

US 2016/069364 A1 relates to a captured fastener apparatus and a method of making the same.

US 5 094 579 A relates to a bolt and rubber grommet assembly which allows relative movement or axial play between the bolt and grommet while retaining the bolt in the grommet.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

A head-up display configured to be provided in a cockpit of a vehicle, the head-up display comprising a housing and a pseudo-combined portion configured to maintain an aligned state before the fixing member is combined between the head-up display and a cowl cross bar. The pseudo-combined portion is configured to support a fixing member, the fixing member being configured to join the head-up display with an inner side of the cockpit, the pseudo-combined portion being affixed at a portion of the head-up display. The pseudo-combined portion comprises a pseudo-combined member integrally provided on the head-up display. The pseudo-combined member is configured to partially protrude from an inner surface of the pseudo-combined portion in a direction of a central axis, and is further configured to extend upward in a protruding shape in the direction of the central axis. A hook is formed at an end of the pseudo-combined member in the direction of the central axis. The retention member is configured to be snap-fit combined with a thread of the fixing member by using the hook. The pseudo-combined member is formed in a discontinuous annular shape is expanded in a circumferential direction by the fixing member thereby fixing the fixing member.

The fixing member may be configured to maintain a state of being aligned with the pseudo-combined portion, based on a fixing force generated from the pseudo-combined member.

The pseudo-combined portion may be provided on a lower case of the head-up display.

The pseudo-combined portion may include a through hole defined therein, the through hole being configured to receive the fixing member in the lower case and the pseudo-combined portion further includes a nut configured to generate a combining force by engaging with a portion of the fixing member received within the through hole.

### BRIEF DESCRIPTION OF THE DRAWINGS

FIG. 1 is a view showing an example in which a head-up display is combined with a cockpit in a vehicle according to one embodiment of the present disclosure.
FIG. 2 is a cross-sectional side view showing a first pseudo-combined member according to a first embodiment of the present disclosure, which is taken along line A-A in FIG. 1.
FIG. 3 is a perspective view showing the first pseudo-combined member according to the first embodiment of the present disclosure is separated from a pseudo-combined portion.
FIG. 4 is an exploded perspective view showing a second pseudo-combined member
FIG. 5 is a cross-sectional side view showing the second pseudo-combined member which is taken along line B-B in FIG. 4.
FIG. 6 is a cross-sectional side view showing a third pseudo-combined member
**FIG.** 7 is a cross-sectional side view showing a fourth pseudo-combined member

Throughout the drawings and the detailed description, unless otherwise described or provided, the same, or like, drawing reference numerals may be understood to refer to the same, or like, elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

Advantages and features of the present disclosure and methods of achieving the advantages and features will be clear with reference to embodiments described in detail below together with the accompanying drawings. However, the present disclosure is not limited to the embodiments disclosed herein but will be implemented in various forms. The embodiments of the present disclosure are provided so that the present disclosure is completely disclosed, and a person with ordinary skill in the art can fully understand the scope of the present disclosure. The present invention will be defined only by the scope of the appended claims. Meanwhile, the terms used in the present specification are for explaining the embodiments, not for limiting the present disclosure.

Terms, such as first, second, A, B, (a), (b) or the like, may be used herein to describe components. Each of these terminologies is not used to define an essence, order or sequence of a corresponding component but used merely to distinguish the corresponding component from other component(s). For example, a first component may be referred to as a second component, and similarly the second component may also be referred to as the first component.

Throughout the specification, when a component is described as being "connected to," or "coupled to" another component, it may be directly "connected to," or "coupled to" the other component, or there may be one or more other components intervening therebetween. In contrast, when an element is described as being "directly connected to," or "directly coupled to" another element, there can be no other elements intervening therebetween.

In a description of the embodiment, in a case in which any one element is described as being formed on or under another element, such a description includes both a case in which the two elements are formed in direct contact with each other and a case in which the two elements are in indirect contact with each other with one or more other elements interposed between the two elements. In addition, when one element is described as being formed on or under another element, such a description may include a case in which the one element is formed at an upper side or a lower side with respect to another element.

The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

**.**

FIG**.** 1 is a view showing an example in which a head-up display is combined with a cockpit in a vehicle according to the invention.

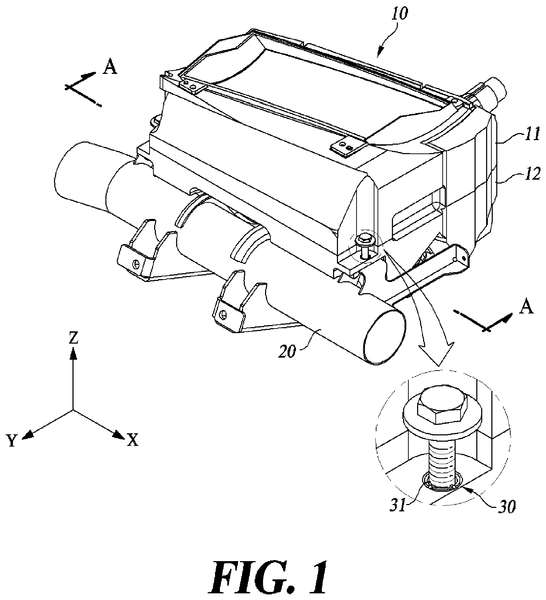

Referring to FIG. 1, a head-up display (10) according to one embodiment forms a case by using an upper case (11) and a lower case (12).

In order to specifically show a combined state between a cowl cross bar (20) and the head-up display (10), only a partial shape of the cowl cross bar (20) is shown in Fig. 1. Although not shown in Fig. 1, the cowl cross bar (20) is provided so that a steering apparatus is fixed to a vehicle body on a front side of the vehicle. The cowl cross bar (20) is disposed perpendicularly to a steering column of the steering apparatus, and is directly mounted on the vehicle body while the cowl cross bar (20) is located to be long in a direction of a width of the vehicle.

The cowl cross bar (20) has a structure to withstand vibrations transmitted from the steering apparatus while absorbing the vibrations.

The head-up display (10) may be disposed by being combined with one region of the cowl cross bar (20). The head-up display (10) may be combined with a bracket formed in the cowl cross bar (20). On the cowl cross bar (20), a combining position of the head-up display (10) is preferably disposed on a front side of a driver's seat where a steering wheel is disposed.

The head-up display (10) may be combined with the cowl cross bar (20) by using a fixing member (31). For example, the fixing member (31) may be a bolt or a screw. In addition, a washer may be inserted into the fixing member (31).

In describing the present disclosure, when the fixing member (31) is the bolt, the fixing member (31) may be engaged with and combined with a nut (220) (to be described later). When the fixing member (31) is the screw, the fixing member (31) may be engaged with and combined with a thread formed inside a through hole (200) (to be described later).

The cowl cross bar (20) may include a bracket (not shown) that is combined with the head-up display (10).

The bracket of the cowl cross bar (20) may be combined with the lower case (12) of the head-up display (10) by using the fixing member (31). For example, the lower case (12) and the bracket of the cowl cross bar (20) may be combined in at least two regions.

In describing the present disclosure, only the combining between the head-up display (10) and the cowl cross bar (20) has been described, but the combining of the head-up display (10) inside the cockpit is not limited thereto. The head-up display (10) may be combined with components inside the cockpit of the vehicle which are not described above, by using the fixing member (31). For example, the head-up display (10) may be combined with a crash pad main panel (C/PAD) by using the fixing member (31). Therefore, the following description based on the combining between the head-up display (10) and the cowl cross bar (20) may be equally applied to the combining between the head-up display (10) and the components inside the cockpit of the vehicle.

The head-up display (10) according to one embodiment of the present invention includes a pseudo-combined portion (30).

When the head-up display (10) is mounted on the cowl cross bar (20), the pseudo-combined portion (30) is disposed to be in contact with the bracket of the cowl cross bar (20).

The pseudo-combined portion (30) maintains an aligned state before the fixing member (31) is combined between the head-up display (10) and the cowl cross bar (20). In other words, the pseudo-combined portion (30) provides a predetermined fixing force so that the fixing member (31) is aligned in a non-combined state. The fixing member (31) is aligned by the pseudo-combined portion (30) so that the head-up display (10) coincides with the through hole (200) formed in the cowl cross bar (20). Here, the alignment of the fixing member (31) according to the embodiment of the present disclosure means a posture of the fixing member (31) in which a central axis of the fixing member (31) in a longitudinal direction is disposed parallel to a z-axis direction shown in FIG. 1, and the central axis of the fixing member (31) coincides with the central axis of the through hole (200) formed in the pseudo-combined portion (30). The alignment of the fixing member (31) in another sense may mean a state where a worker can combine the fixing member (31) to the pseudo-combined portion (30) by using an assembly tool without performing a process of aligning the fixing member (31).

According to one embodiment of the present disclosure, the head-up display (10) may be moved in a state where the fixing member (31) is aligned with the pseudo-combined portion (30). For example, when a process of assembling the head-up display (10) and a process of combining the head-up display (10) with the cowl cross bar (20) are performed as different processes, the fixing member (31) maintains a state of being aligned with the pseudo-combined portion (30). In this manner, a post-process time for aligning the fixing member (31) to the pseudo-combined portion (30) may be shortened. Specifically, the reason is that a process step in which a worker lifts the fixing member (31) with a hand of the worker or by using the assembly tool and aligns the fixing member (31) at a combining position may be omitted.

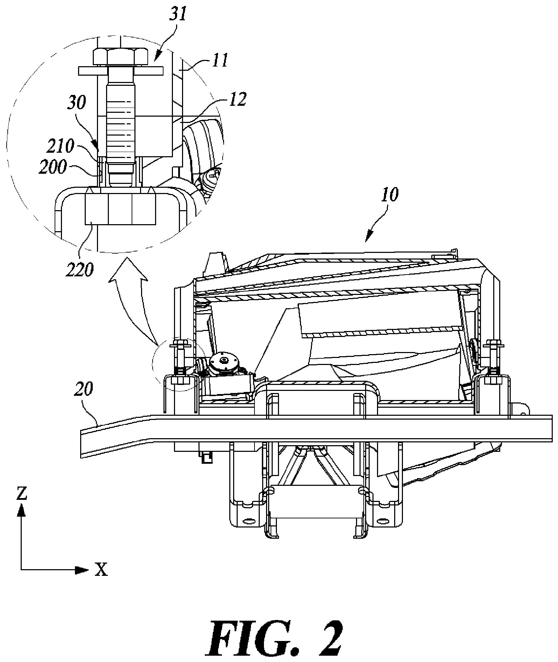

FIG. 2 is a cross-sectional side view showing a first pseudo-combined member according to a first embodiment of the present disclosure, which is taken along line A-A in FIG. 1.

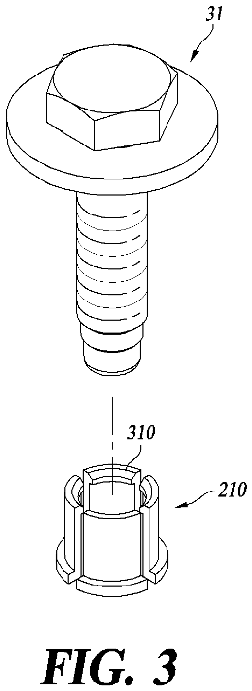

FIG. 3 is a perspective view showing the first pseudo-combined member according to the first embodiment of the present invention is separated from the pseudo-combined portion.

Referring to FIGS. 2 and 3, the first pseudo-combined member (210) according to the first embodiment aligns the fixing member (31) to the through hole (200). The first pseudo-combined member (210) provides a predetermined fixing force to the fixing member (31).

The first pseudo-combined member (210) according to the first embodiment of the present disclosure is formed integrally with the pseudo-combined portion (30). Specifically, the first pseudo-combined member (210) is formed on an inner surface of the through hole (200) formed in the lower case (12).

The first pseudo-combined member (210) is formed in a discontinuous annular shape.

The first pseudo-combined member (210) is formed to partially protrude from the inner surface of the through hole (200) in a direction of the central axis of the through hole (200) and to continuously protrude in the z-axis direction from a portion protruding in the direction of the central axis. A hook (310) is formed in an end of the first pseudo-combined member (210) in the z-axis direction. The first pseudo-combined member (210) is snap-fit combined with a portion of the thread formed in the fixing member (31). When the thread of the fixing member (31) is fixed, the first pseudo-combined member (210) is expanded in a circumferential direction by the fixing member (31) and fixes the fixing member (31). The first pseudo-combined member (210) is snap-fit combined with the thread of the fixing member (31) by using the hook (310).

The first pseudo-combined member (210) is snap-fit combined with a portion of the thread of the fixing member (31). Therefore, the fixing member (31) may maintain a state of being aligned with the through hole (200) by receiving the predetermined fixing force from the first pseudo-combined member (210). However, the first pseudo-combined member (210) may be formed as a separate object separated from the pseudo-combined portion (30).

When the worker applies a pressure to the fixing member (31) in a (-)z-axis direction by using the assembly tool, the fixing member (31) may be assembled by penetrating into the through hole (200) while ignoring the fixing force provided by the first pseudo-combined member (210). In other words, the fixing force by which the first pseudo-combined member (210) fixes the fixing member (31) is formed to be smaller than a magnitude of an external force transmitted from the worker.

FIG**.** 4 is an exploded perspective view showing a second pseudo-combined member not according to the invention.

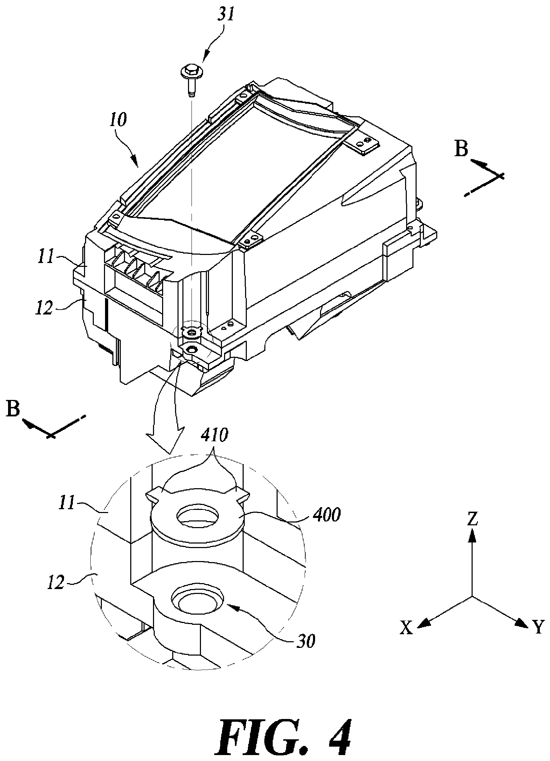

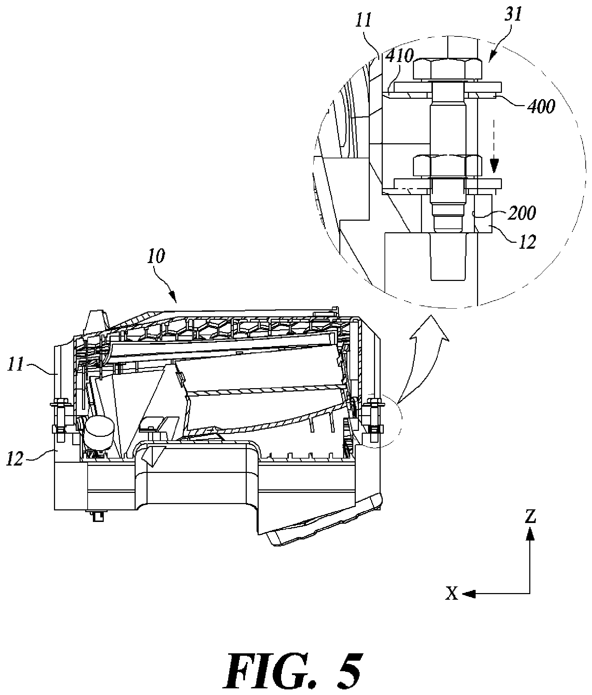

FIG. 5 is a cross-sectional side view showing the second pseudo-combined member which is taken along line B-B in FIG. 4.

Referring to FIGS. 4 and 5, the second pseudo-combined member (400) may be formed in one region of the upper case (11). The second pseudo-combined member (400) is formed in one region of the upper case (11) at a predetermined distance from the pseudo-combined portion (30) so that the fixing member (31) is aligned at a predetermined height from the pseudo-combined portion (30).

The second pseudo-combined member (400) includes a fixing portion (410).

With regard to the movement of the fixing member (31) in the (-)z-axis direction which is caused by the external force of the worker, the second pseudo-combined member (400) is formed to be easily broken from the upper case (11). For example, the fixing portion (410) may form a tapered surface from the second pseudo-combined member (400) to one surface of the upper case (11).

The second pseudo-combined member (400) has a fixing force with the upper case (11) to such an extent that a self-weight of the fixing member (31) can be supported. Therefore, when the worker applies the external force to the fixing member (31) by using the assembly tool or the like, the fixing portion (410) may be easily broken from the upper case (11).

The second pseudo-combined member (400) is formed so that a head of the fixing member (31) or a washer inserted into the fixing member (31) is caught (i.e., received and fastened) by the self-weight of the fixing member (31). A hole into which a portion of the fixing member (31) is inserted is formed in the second pseudo-combined member (400). Here, the hole formed in the second pseudo-combined member (400) is formed to be larger than an outer diameter of the fixing member (31) and to be smaller than an outer diameter of the head or the washer of the fixing member (31).

After the fixing portion (410) is broken from the upper case (11) by the external force applied by the worker, the second pseudo-combined member (400) is disposed between the fixing member (31) and the pseudo-combined portion (30).

The second pseudo-combined member (400) broken from the upper case (11) may prevent the fixing member (31) from damaging or wearing a surface of the pseudo-combined portion (30). In particular, when the lower case (12) having the pseudo-combined portion (30) is formed of a material such as plastic, the second pseudo-combined member (400) broken from the upper case (11) may prevent deformation caused by the combining of the fixing member (31).

When the fixing member (31) combined with the pseudo-combined portion (30) is exposed to vibrations transmitted from a road surface of the vehicle or vibrations generated due to a clearance between components inside the vehicle, the second pseudo-combined member (400) broken from the upper case (11) can attenuate the vibrations transmitted to the fixing member (31).

The second pseudo-combined member (400) broken from the upper case (11) may improve adhesion strength between the fixing member (31) and the nut (220).

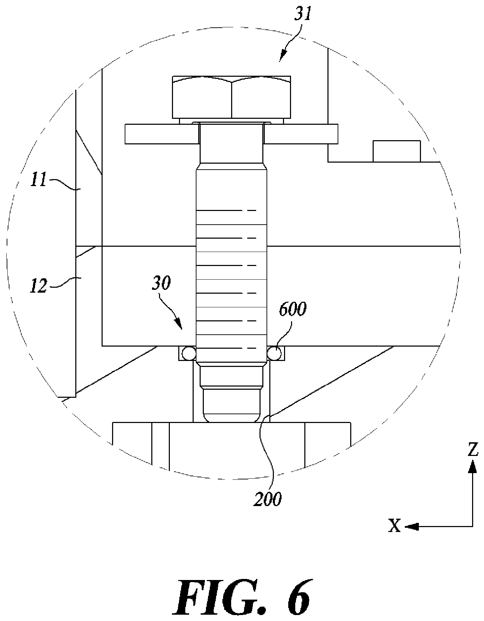

FIG. 6 is a cross-sectional side view showing a third pseudo-combined member not according to the invention.

FIG. 6 shows a cross-sectional side view taken along line B-B shown in FIG. 4 with reference to the third embodiment.

Referring to FIGS. 4 and 6, a third pseudo-combined member (600) is fitted into and combined with a portion of the thread of the fixing member (31).

The third pseudo-combined member (600) is mounted on the through hole (200) in the z-axis direction in a state of being fitted into and combined with the fixing member (31). The fixing member (31) maintains a state of being aligned with the central axis of the through hole (200). The third pseudo-combined member (600) is mounted on the through hole (200) to fix the fixing member (31) to the pseudo-combined portion (30).

The third pseudo-combined member (600) may be mainly formed of a rubber material. The third pseudo-combined member (600) may be an O-ring, for example.

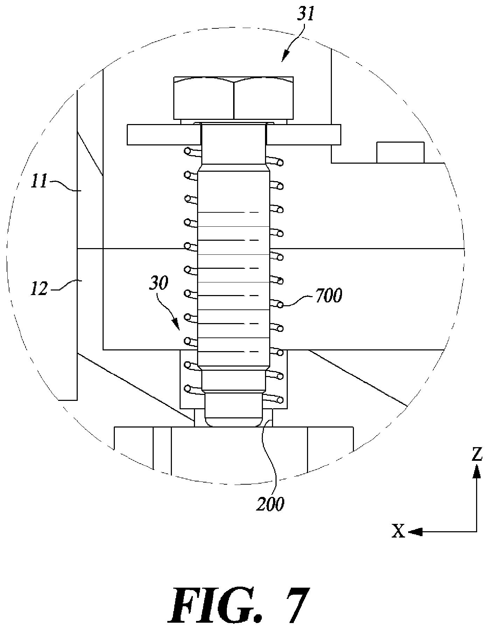

FIG. 7 is a cross-sectional side view showing a fourth pseudo-combined member not according to the invention. FIG. 7 shows a cross-sectional side view taken along line B-B shown in FIG. 4 with reference to the fourth embodiment.

Referring to FIGS. 4 and 7, a fourth pseudo-combined member (700) is disposed so that one side is in contact with a lower surface of the head of the fixing member (31) and the other side is in contact with the through hole (200).

The fourth pseudo-combined member (700) fixes the fixing member (31) to be aligned on the pseudo-combined portion (30), based on elasticity.

For example, the fourth pseudo-combined member (700) may be a compression spring. The compression spring has a reaction force against a compressive force. That is, the fourth pseudo-combined member (700) has the reaction force in the z-axis direction against a vertical force in the (-)z-axis direction, which is generated based on the self-weight of the fixing member (31). Therefore, the fourth pseudo-combined member (700) may align the fixing member (31) on the pseudo-combined portion (30).

When the worker applies the pressure to the fixing member (31) in the (-)z-axis direction by using the assembly tool, the fourth pseudo-combined member (700) is compressed in the (-)z-axis direction by the head of the fixing member (31) or the washer inserted into the fixing member (31). In this case, the fourth pseudo-combined member (700) may be elastically deformed (compressed), and may be disposed inside the pseudo-combined portion (30).

Various embodiments of the present disclosure do not list all available combinations but are for describing a representative aspect of the present disclosure, and descriptions of various embodiments may be applied independently or may be applied through a combination of two or more.

A number of embodiments have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components. Accordingly, other implementations are within the scope of the following claims.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components.

## Claims

1. A head-up display (10) configured to be provided in a cockpit of a vehicle, the head-up display (10) comprising:
a housing (11, 12); and
a pseudo-combined portion (30) configured to maintain an aligned state before the fixing member (31) is combined between the head-up display (10) and a vehicle cross bar (20) and configured to support the fixing member (31), the fixing member (31) being configured to join the head-up display (10) with an inner side of the cockpit, the pseudo-combined portion (30) being affixed at a portion of the head-up display (10),
the pseudo-combined portion (30) comprises:
a pseudo-combined member (210) integrally provided on the head-up display (10), wherein the pseudo-combined member (210) is configured to partially protrude from an inner surface of the pseudo-combined portion (30) in a direction of a central axis,
wherein the pseudo-combined member (210) is further configured to extend upward in a protruding shape in the direction of the central axis,
**characterized in that** a hook (310) is formed at an end of the pseudo-combined member (210) in the direction of the central axis,
wherein the pseudo-combined member (210) is configured to be snap-fit combined with a thread of the fixing member (31) by using the hook (310),
wherein the pseudo-combined member (210) is formed in a discontinuous annular shape, and
wherein the pseudo-combined member (210) is expanded in a circumferential direction by the fixing member (31) thereby fixing the fixing member (31).

2. The head-up display (10) of claim 1, wherein the fixing member (31) is configured to maintain a state of being aligned with the pseudo-combined portion (30), based on a retention force generated from the pseudo-combined member (210).

3. The head-up display (10) of claim 1 or 2, wherein the pseudo-combined portion (30) is provided on a lower case (12) of the housing.

4. The head-up display (10) of claim 3, wherein the pseudo-combined portion (30) includes a through hole (200) defined therein, the through hole (200) being configured to receive the fixing member (31) in the lower case (12), and
wherein the pseudo-combined portion (30) further comprises a nut (220) configured to generate a combining force by engaging with a portion of the fixing member (31) received within the through hole (200).

## Patentansprüche

1. Head-up-Display (10), das konfiguriert ist, um in einem Cockpit eines Fahrzeugs bereitgestellt zu werden, wobei das Head-up-Display (10) aufweist:
ein Gehäuse (11, 12); und
einen pseudokombinierten Abschnitt (30), der konfiguriert ist, um einen ausgerichteten Zustand beizubehalten, bevor das Befestigungselement (31) zwischen dem Head-up-Display (10) und einer Fahrzeugquerstange (20) kombiniert wird, und konfiguriert ist, um das Befestigungselement (31) zu stützen, wobei das Befestigungselement (31) konfiguriert ist, um das Head-up-Display (10) mit einer Innenseite des Cockpits zu verbinden, wobei der pseudokombinierte Abschnitt (30) an einem Abschnitt des Head-up-Displays (10) befestigt ist,
wobei der pseudokombinierte Abschnitt (30) aufweist:
ein pseudokombiniertes Element (210), das an dem Head-up-Display (10) einstückig bereitgestellt ist, wobei das pseudokombinierte Element (210) konfiguriert ist, um von einer Innenoberfläche des pseudokombinierten Abschnitts (30) in einer Richtung einer Mittelachse teilweise vorzustehen,
wobei das pseudokombinierte Element (210) ferner konfiguriert ist, um sich nach oben in einer vorstehenden Form in der Richtung der Mittelachse zu erstrecken,
**dadurch gekennzeichnet, dass** ein Haken (310) an einem Ende des pseudokombinierten Elements (210) in der Richtung der Mittelachse ausgebildet ist,
wobei das pseudokombinierte Element (210) konfiguriert ist, um durch Verwenden des Hakens (310) mit einem Gewinde des Befestigungselements (31) rastend kombiniert zu werden,
wobei das pseudokombinierte Element (210) in einer diskontinuierlichen Ringform ausgebildet ist, und
wobei das pseudokombinierte Element (210) in einer Umfangsrichtung durch das Befestigungselement (31) ausgedehnt wird, wodurch das Befestigungselement (31) befestigt wird.

2. Head-up-Display (10) nach Anspruch 1, wobei das Befestigungselement (31) konfiguriert ist, um basierend auf einer Haltekraft, die von dem pseudokombinierten Element (210) erzeugt wird, einen mit dem pseudokombinierten Abschnitt (30) ausgerichteten Zustand beizubehalten.

3. Head-up-Display (10) nach Anspruch 1 oder 2, wobei der pseudokombinierte Abschnitt (30) an einem Unterteil (12) des Gehäuses bereitgestellt ist.

4. Head-up-Display (10) nach Anspruch 3, wobei der pseudokombinierte Abschnitt (30) ein darin definiertes Durchgangsloch (200) enthält, das Durchgangsloch (200) konfiguriert ist, um das Befestigungselement (31) in dem Unterteil (12) aufzunehmen, und
wobei der pseudokombinierte Abschnitt (30) ferner eine Mutter (220) aufweist, die konfiguriert ist, um durch Eingreifen mit einem Abschnitt des Befestigungselements (31), das innerhalb des Durchgangslochs (200) aufgenommen wird, eine kombinierte Kraft zu erzeugen.

## Revendications

1. Unité d'affichage tête haute (10) conçue pour être prévue dans un habitacle d'un véhicule, l'unité d'affichage tête haute (10) comprenant :
un boîtier (11, 12) ; et
une portion pseudo-combinée (30) conçue pour maintenir un état aligné avant que l'élément de fixation (31) soit combiné entre l'unité d'affichage tête haute (10) et une barre transversale de véhicule (20) et conçue pour supporter l'élément de fixation (31), l'élément de fixation (31) étant conçue pour joindre l'unité d'affichage tête haute (10) à un côté interne de l'habitacle, la portion pseudo-combinée (30) étant fixée au niveau d'une portion de l'unité d'affichage tête haute (10),
la portion pseudo-combinée (30) comprend :
un élément pseudo-combiné (210) prévu d'un seul tenant sur l'unité d'affichage tête haute (10), dans laquelle l'élément pseudo-combiné (210) est conçu pour faire partiellement saillie depuis une surface interne de la portion pseudo-combinée (30) dans une direction d'un axe central,
dans laquelle l'élément pseudo-combiné (210) est en outre conçu pour s'étendre vers le haut en une forme en saillie dans la direction de l'axe central,
caractérisée en ce qu**'**un crochet (310) est formé au niveau d'une extrémité de l'élément pseudo-combiné (210) dans la direction de l'axe central,
dans laquelle l'élément pseudo-combiné (210) est conçu pour être combiné par encliquetage avec un filetage de l'élément de fixation (31) en utilisant le crochet (310),
dans laquelle l'élément pseudo-combiné (210) est formé en une forme annulaire discontinue, et
dans laquelle l'élément pseudo-combiné (210) est expansé dans une direction circonférentielle par l'élément de fixation (31), fixant ainsi l'élément de fixation (31).

2. Unité d'affichage tête haute (10) selon la revendication 1, dans laquelle l'élément de fixation (31) est conçu pour maintenir un état d'alignement sur la portion pseudo-combinée (30), sur la base d'une force de retenue générée par l'élément pseudo-combiné (210).

3. Unité d'affichage tête haute (10) selon la revendication 1 ou 2, dans laquelle la portion pseudo-combinée (30) est prévue sur un coffret inférieur (12) du boîtier.

4. Unité d'affichage tête haute (10) selon la revendication 3, dans laquelle la portion pseudo-combinée (30) comporte un trou traversant (200) défini dans celle-ci, le trou traversant (200) étant conçu pour recevoir l'élément de fixation (31) dans le coffret inférieur (12), et
dans laquelle la portion pseudo-combinée (30) comprend en outre un écrou (220) conçu pour générer une force de combinaison en venant en prise avec une portion de l'élément de fixation (31) reçue à l'intérieur du trou traversant (200).
